# FASCICULE DE BREVET EUROPEEN

(11) **EP 3 354 910 B1**
(45) Date de publication et mention de la délivrance du brevet: **05.05.2021**
(21) Numéro de dépôt: 18153553.5
(22) Date de dépôt: 25.01.2018
(51) Int. Cl.: F16B 21/07

(54) **ENSEMBLE COMPRENANT UNE AGRAFE NOTAMMENT DE MAINTIEN D'OBJETS TELS QUE DES CANALISATIONS OU CÂBLES SUR UNE STRUCTURE DE SUPPORT ET UN ORGANE FILETÉ**
ZUSAMMENBAU AUS KLAMMER, INSBESONDERE ZUR HALTERUNG VON GEGENSTÄNDEN, WIE ETWA ROHRLEITUNGEN ODER KABELN, AUF EINER HALTERUNGSSTRUKTUR UND GEWINDEORGAN
ASSEMBLY COMPRISING A STAPLE, IN PARTICULAR FOR HOLDING OBJECTS SUCH AS PIPES OR CABLES ON A SUPPORT STRUCTURE AND A THREADED MEMBER

(30) Priorité: 26.01.2017 FR 1750648
(43) Date de publication de la demande: 01.08.2018
(73) Titulaire: LISI Automotive Rapid, 95650 Puiseux-Pontoise (FR)
(72) Inventeur: NGUYEN, Benjamin, 77640 Jouarre (FR)
(74) Mandataire: Berger, Helmut

(56) Documents cités:
- EP-A1- 1 512 898
- WO-A1-2006/131174
- DE-A1-102008 007 135
- DE-A1-102014 111 600
- FR-A1- 2 765 280
- FR-A1- 2 960 606

## Description

L'invention concerne un ensemble comprenant une agrafe notamment de maintien d'objets tels que des canalisations ou câbles sur une structure de support, et un organe fileté tel qu'un goujon fileté ou une vis, du type décrit dans le préambule de la revendication 1.

Les agrafes de ce type qui sont connues, par exemple celles décrites dans le document DE 10 2014 111600, présentent l'inconvénient majeur que les moyens de démontage sont formés par un dispositif relativement complexe et surtout encombrant.

L'invention a pour but de pallier cet inconvénient des agrafes connues.

Pour atteindre ce but, l'ensemble selon l'invention comporte les caractéristiques qui sont énoncées dans la partie caractérisante de la revendication 1.

D'autres caractéristiques avantageuses de l'invention sont indiquées dans les revendications dépendantes.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :

Selon une caractéristique de l'invention l'agrafe est caractérisée en ce que le dispositif de démontage est adapté pour permettre l'application aux plaques dentées 26 d'une force de traction F2 des plaques dans la direction d'écartement de celles-ci.

Selon une autre caractéristique de l'invention, l'agrafe est caractérisée en ce que le dispositif de démontage est relié aux extrémités inférieures des plaques dentées 26, opposées aux extrémités supérieures d'introduction de l'organe fileté 3 entre les plaques, et en ce que le dispositif est conçu pour assurer le maintien des plaques dans des positions parallèles à celles de leur montage sur l'organe fileté 3.

Selon encore une autre caractéristique l'agrafe est caractérisée en ce que le dispositif de démontage comprend un plateau 35 situé sous les extrémités inférieures des plaques dentées 26 et reliées à ces extrémités par des parois de liaison 37 inclinées dans le sens inverse par rapport aux parois de maintien 31.

Selon encore une autre caractéristique l'agrafe est caractérisée en ce que le corps d'agrafe 13 est ouvert sur au moins un côté latéral libre 23 et le plateau 35 est accessible à travers cette ouverture pour permettre l'application à la plaque de la force de traction d'écartement de celle-ci.

Selon encore une autre caractéristique l'agrafe est caractérisée en ce que les plaques dentées 26 sont maintenues chacune par une paroi de maintien 31 dont une extrémité est reliée à la plaque 26 au niveau de l'extrémité d'introduction de l'organe fileté 3 entre les deux plaques 26, tandis que l'autre extrémité est reliée au corps 13 et en ce que la paroi de maintien 31 est inclinée dans le corps de façon que les plaques s'écartent lors de l'introduction entre elles de l'organe fileté 3.

Selon encore une autre caractéristique l'agrafe est caractérisée en ce que chaque plaque dentée 26 est maintenue dans le corps 13 par deux parois de liaison parallèle inclinée 31, qui forment avec les plaques 26 et le corps un parallélogramme déformable.

Selon encore une autre caractéristique l'agrafe est caractérisée en ce qu'elle est susceptible d'être montée sur l'organe fileté 3 à l'aide d'un outil de montage 40 amoviblement associable à l'agrafe lors du montage.

Selon encore une autre caractéristique l'agrafe est caractérisée en ce que l'outil 40 est conçu pour contribuer à la résistance mécanique du corps 13 de l'agrafe lors du montage de celle-ci sur l'organe fileté 3.
- La figure 1 est une vue en perspective d'une agrafe d'un ensemble selon l'invention pourvu d'un outil de montage sur l'organe fileté ;
- la figure 2 est une vue en élévation de l'agrafe de la figure 1 sans l'outil de montage ;
- la figure 3 est une vue de dessus de l'agrafe selon la figure 2 ;
- la figure 4 est une vue en coupe selon la ligne IV-IV de la figure 3 ;
- la figure 5 est une vue en coupe selon la ligne V-V de la figure 2 ;
- la figure 6 est une vue de dessus de l'outil indiquée en 40 sur la figure 1 ;
- la figure 7 est une vue en coupe selon la ligne VII-VII de la figure 6, et
- la figure 8 est une vue en coupe similaire à la figure 4 d'une autre version de réalisation de l'agrafe d'un ensemble selon l'invention.

Comme le montrent les figures, à titre d'exemple non exclusif, une agrafe 1 d'un ensemble selon l'invention est destinée à être montée amoviblement sur un organe fileté 3 tel qu'une vis ou un goujon fileté, implanté sur une structure porteuse 5. L'agrafe 1 comprend, réalisée sur une partie formant semelle 7, une pluralité de berceaux 9 de réception et de maintien de canalisations ou câbles 11 et une partie constituant le corps 13 de l'agrafe, qui est conçu pour permettre le montage amovible de l'agrafe sur l'organe fileté 3, dans le cas d'exemple une vis.

Ce corps de l'agrafe comprend une structure de cage de forme sensiblement parallélépipédique qui est fermée en bas par une partie de semelle 17, comporte des côtés des berceaux deux parois latérales parallèles 19 s'étendant perpendiculairement à partir de la semelle vers le haut. La cage est délimitée en haut par une paroi supérieure 15. Celle-ci présente en son centre une ouverture circulaire 21 permettant le passage de la vis 3. La cage est ouverte aux deux autres côtés latéraux, à savoir le côté avant 23 et arrière 24. Le corps 13 comporte, maintenues à l'intérieur de la cage, deux plaques 26 qui s'étendent perpendiculairement à la semelle 17 à une distance prédéterminée l'une de l'autre, parallèlement aux parois 19 et symétriquement par rapport à l'axe médian Y-Y transversale du corps 13, c'est-à-dire perpendiculairement à l'axe longitudinal X-X de l'agrafe. Ces plaques sont écartées l'une de l'autre d'une distance qui correspond au diamètre de la vis 3 et sont pourvues sur leurs faces mutuellement en regard 27 des dents 29 qui sont configurées pour pouvoir s'agripper sur les filets de la vis lorsque l'agrafe est enfilée sur celle-ci.

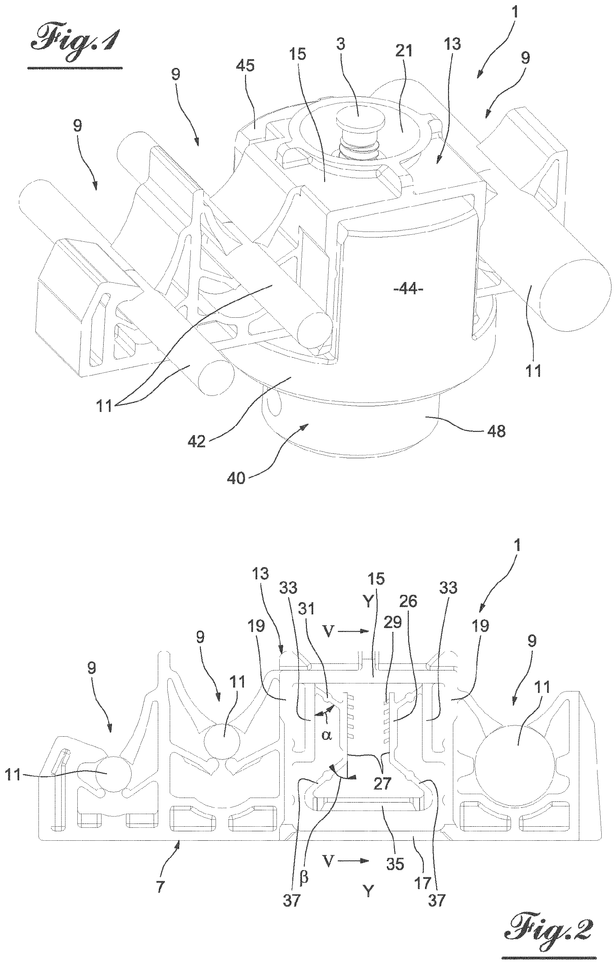

Chaque plaque dentée 26 est maintenue à l'intérieur de la cage porteuse, dans la version de réalisation selon les figures 1 à 5, par une paroi de maintien 31 qui s'étend entre la face extérieure de la plaque et la cage porteuse, par l'intermédiaire d'une paroi 33 parallèle à la paroi latérale 19 et solidaire de cette dernière. La paroi de maintien 31 s'étend obliquement par rapport à la paroi intermédiaire 33 en formant avec cette dernière un angle α qui est inférieur à 90° et avantageusement de 45°. Comme on le voit sur les figures, l'endroit de jonction de la paroi 31 à la paroi intermédiaire 33 est situé plus haut que la jonction de la paroi de liaison à la plaque 26. Les parois de maintien et leur jonction aux parois intermédiaires 33 de la cage sont conçues de façon que les plaques dentées 26 puissent élastiquement s'écarter l'une de l'autre lors de l'enfilement de l'agrafe sur la vis, c'est-à-dire sous l'effet d'une force F1 agissant sur les plaques, verticalement de haut en bas, à savoir dans la direction de pénétration de la vis dans le corps de l'agrafe. La paroi de maintien 31 est reliée à sa plaque dentée 29 au niveau de l'extrémité supérieure de celle-ci.

Concernant les extrémités inférieures des plaques dentées, elles sont reliées chacune à une extrémité d'un plateau rigide 35 qui s'étend horizontalement à une certaine distance au-dessus de la semelle 17, par une paroi de liaison 37 qui est inclinée par rapport à sa plaque dentée correspondante 26 selon un angle β avantageusement égal à l'angle a, mais dans une direction d'inclinaison contraire à celle de la paroi de maintien 31. Ces parois de liaison 37 sont conçues de façon à procurer une liaison élastiquement déformable afin que les plaques puissent élastiquement s'écarter l'une de l'autre tout en étant maintenues dans leur position verticale.

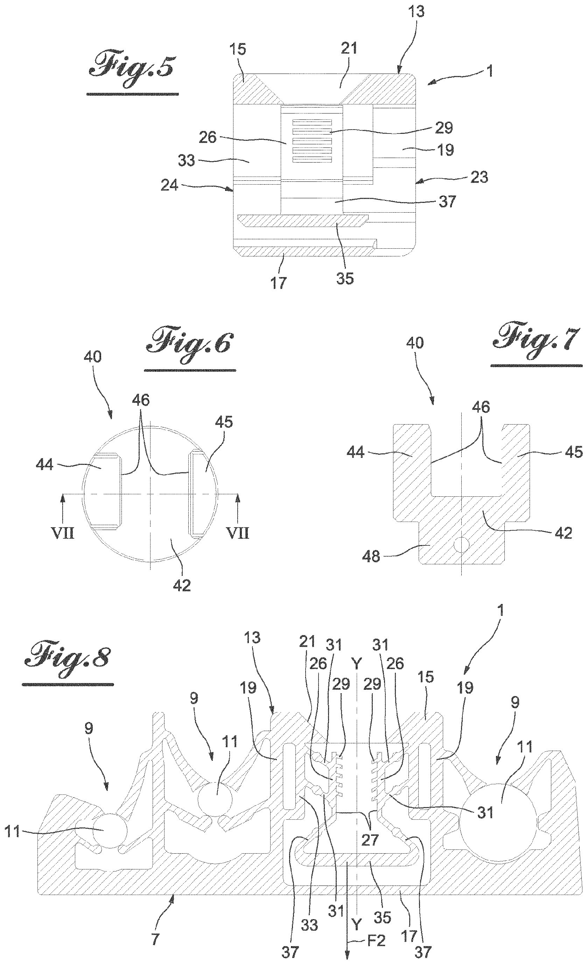

La figure 8 illustre une autre version de réalisation du dispositif des plaques dentées dans laquelle chaque plaque est maintenue, supplémentairement à sa paroi de maintien 31 susmentionnée par une deuxième paroi 31 parallèle à la première, mais disposée au niveau inférieur de la plaque. Les deux parois 31 forment ainsi avec leur plaque dentée 26 et leur plaque intermédiaire 33 un parallélogramme déformable de guidage de la plaque dentée.

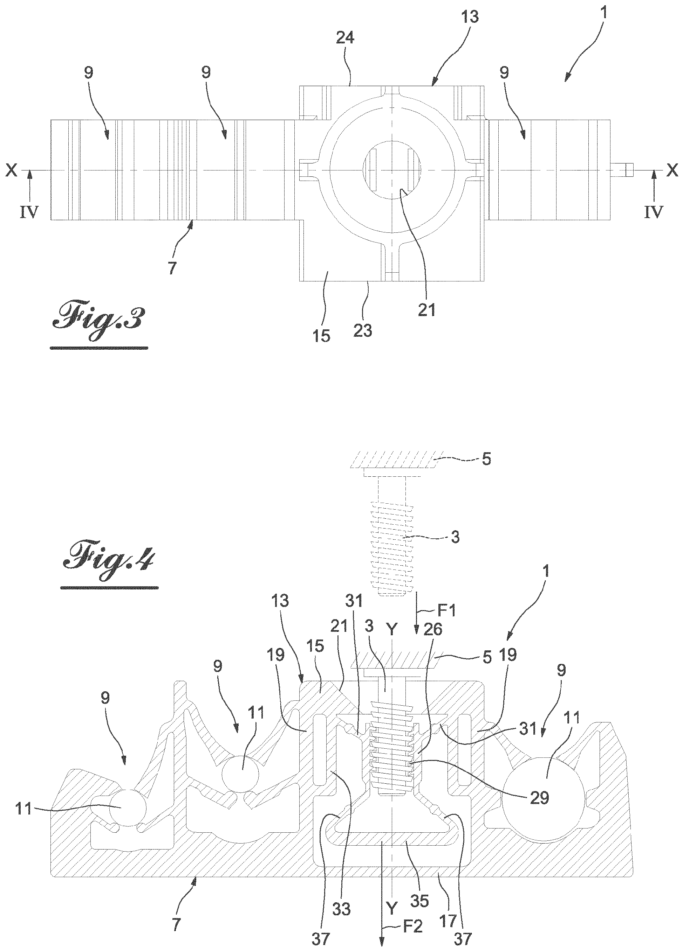

En se reportant aux figures 3 et 5, on constate qu'au niveau d'un côté ouvert de la cage, à savoir du côté 23, la paroi supérieure 15 s'étend au-delà de la semelle 17. Cette particularité avantageuse mais pas obligatoire permet l'utilisation de l'outil représenté aux figures 6 et 7 lors de la mise en place de l'agrafe sur la vis 3. L'outil noté 40 comporte une base circulaire 42 sur laquelle s'élèvent verticalement des segments de parois 44, 45 qui sont diamétralement opposées et dont les faces 46 mutuellement en regard sont planes et parallèles de façon à s'étendre lors de l'utilisation de l'outil, parallèlement à l'axe longitudinal X-X. Le segment 44 présente dans la direction perpendiculaire à sa face frontale 46 une épaisseur supérieure à celle du segment 45. L'outil comporte du côté inférieure de la base 42 une excroissance axiale 48 destinée à rendre plus aisé l'emploi de l'outil. Dans la position d'utilisation de celui-ci, la base circulaire 42 vient en appui sous la semelle 17 de la cage du corps de l'agrafe et le segment plus épais 44 vient en appui sous le rebord en saillie de la paroi supérieure 15 de la cage. Ainsi l'outil en plus de sa fonction de faciliter le montage de l'agrafe, contribue à assurer la rigidité mécanique du corps de l'agrafe lors de sa mise en place sur la vis.

Concernant le fonctionnement de l'agrafe proposée par l'invention, il ressort de la description qui précède, que, lors de la mise en place de l'agrafe sur l'organe fileté 3, c'est-à-dire un goujon fileté ou une vis, les plaques dentées 26 s'écartent élastiquement. Dans la position de fixation sur l'organe fileté, les dents 29 des plaques s'agrippent sur les filets de l'organe 3. Si l'on souhaite démonter l'agrafe, il suffit d'exercer une force sur le plateau 35, dans la direction de la flèche F2 pour provoquer l'écartement des plaques 26, de façon que les dents des plaques puissent se dégager des filets de l'organe 3 et que l'agrafe puisse être retirée de celui-ci. Pour obtenir ce résultat, on pourrait exercer une force de pression sur le plateau 35 pour le déplacer en direction de la semelle 17 ou exercer une force de traction vers la semelle. L'opération pourrait être faite manuellement ou à l'aide d'un outil approprié.

Il ressort de ce qui précède, qu'une caractéristique essentielle de l'invention réside dans la grande différence entre un effort de mise en place très faible et un effort de tenue très importante. L'agrafe est tout de même démontable avec ou sans un outil simple et un effort négligeable.

## Revendications

1. Ensemble comprenant une agrafe notamment de maintien d'objets tels que des canalisations ou câbles sur une structure de support et un organe fileté (3) tel qu'un goujon fileté ou une vis, du type comprenant un corps d'agrafe (13) permettant le montage de celle-ci sur l'organe fileté, qui comprend deux parois rigides parallèles (26) écartées l'une de l'autre d'une distance correspondant au diamètre de l'objet fileté (3) et pourvues sur leur face en regard de dents (29) s'agrippant sur les filets dudit organe (3) lorsque celui-ci est engagé entre les deux parois (26) et qui sont reliées au corps (13) par des parois de maintien (31) adaptées pour permettre aux parois dentées (26) de s'écarter élastiquement l'une de l'autre lors de l'engagement de l'organe fileté (3) entre ces parois (26), l'agrafe comportant également un dispositif de démontage de l'agrafe de l'organe fileté (3) par écartement des plaques dentées (26) de leur position d'agrippement, **caractérisée en ce que** le corps d'agrafe (13) est réalisé sous forme d'une cage porteuse desdits objets et **en ce que** les plaques dentées (26) sont montées dans l'espace interne de la cage et maintenues par des parois de maintien (31) de façon à être élastiquement déplaçables entre leur position d'agrippement sur les filets de l'organe fileté (3) et leur position d'écartement de démontage de l'agrafe de l'organe fileté (3), tout en demeurant dans leur position parallèle l'une à l'autre, sous l'effet d'une force de démontage appliquée au dispositif de démontage et agissant dans la direction d'engagement de l'organe fileté (3) entre les plaques dentées (26).

2. Ensemble selon la revendication 1, **caractérisée en ce que** le dispositif de démontage est adapté pour permettre l'application aux plaques dentées (26) d'une force de traction F2 des plaques dentées dans la direction d'écartement de celles-ci.

3. Ensemble selon la revendication 2, **caractérisée en ce que** le dispositif de démontage est relié aux extrémités inférieures des plaques dentées (26), opposées aux extrémités supérieures d'introduction de l'organe fileté (3) entre les plaques dentées, et **en ce que** le dispositif est conçu pour assurer le maintien des plaques dentées dans des positions parallèles à celles de leur montage sur l'organe fileté (3).

4. Ensemble selon la revendication 3, **caractérisée en ce que** le dispositif de démontage comprend un plateau (35) situé sous les extrémités inférieures des plaques dentées (26) et relié à ces extrémités par des parois de liaison (37) inclinées dans le sens inverse par rapport aux parois de maintien (31).

5. Ensemble selon la revendication 4, **caractérisée en ce que** le corps d'agrafe (13) est ouvert sur au moins un côté latéral libre (23) et le plateau (35) est accessible à travers cette ouverture pour permettre l'application à la plaque de la force de traction d'écartement de celle-ci.

6. Ensemble selon l'une des revendications 1 à 5, **caractérisée en ce que** les plaques dentées (26) sont maintenues chacune par les parois de maintien (31) et **en ce que** les parois de maintien sont reliées par une extrémité à la plaque (26) au niveau de l'extrémité d'introduction de l'organe fileté (3) entre les deux plaques (26), tandis que l'autre extrémité est reliée au corps (13) et **en ce que** les parois maintien (31) sont inclinées dans le corps de façon que les plaques s'écartent lors de l'introduction entre elles de l'organe fileté (3).

7. Ensemble selon l'une des revendications 1 à 5, **caractérisée en ce que** chaque plaque dentée (26) est maintenue dans le corps (13) par deux parois de liaison parallèle inclinée (31), qui forme avec les plaques (26) et le corps un parallélogramme déformable.

8. Ensemble selon l'une des revendications 1 à 7, **caractérisée en ce qu'**elle est susceptible d'être montée sur l'organe fileté (3) à l'aide d'un outil de montage (40) amoviblement associable à l'agrafe lors du montage.

9. Ensemble selon la revendication 8, **caractérisé en ce que** l'outil (40) est conçu pour contribuer à la résistance mécanique du corps (13) de l'agrafe lors du montage de celle-ci sur l'organe fileté (3).

## Patentansprüche

1. Zusammenbau aus Klammer, insbesondere zur Halterung von Gegenständen, wie etwa Rohrleitungen oder Kabeln, auf einer Halterungsstruktur und Gewindeorgan (3) wie z. B. einem Gewindebolzen oder einer Schraube der Art, umfassend einen Klammerkörper (13), die die Montage derselben auf dem Gewindeorgan ermöglicht, die zwei parallele starre Wände (26) umfasst, die voneinander um eine Distanz beabstandet sind, die dem Durchmesser des gewindegeschnittenen Gegenstands (3) entspricht, und versehen auf ihrer gegenüberliegenden Seite mit Zähnen (29), die sich auf dem Gewinde des Organs (3) festklammern, wenn dieses zwischen den zwei Wänden (26) eingegriffen ist, und die mit dem Körper (13) durch Halterungswände (31) verbunden sind, die ausgelegt sind, um den gezähnten Wänden (26) zu ermöglichen, sich elastisch voneinander zu entfernen, wenn das Gewindeorgan (3) zwischen diesen Wänden (26) eingegriffen ist, wobei die Klammer auch eine Vorrichtung zur Demontage der Klammer vom Gewindeorgans (3) durch Entfernen der gezähnten Platten (26) von ihrer Festklammerposition umfasst, **dadurch gekennzeichnet, dass** der Klammerkörper (13) in Form eines Tragegehäuses der Gegenstände ausgeführt ist, und dadurch, dass die gezähnten Platten (26) im inneren Raum des Gehäuses montiert und durch Halterungswände (31) gehalten werden, um zwischen ihrer Festklammerposition auf den Windungen des Gewindeorgans (3) und ihrer Beabstandungsposition zur Demontage der Klammer des Gewindeorgans (3) unter der Einwirkung einer Demontagekraft, die auf die Vorrichtung zur Demontage angewendet wird und in der Eingriffsrichtung des Gewindeorgans (3) zwischen den gezähnten Platten (26) wirkt, verschiebbar zu sein, wobei sie in ihrer zueinander parallelen Position verbleiben,

2. Zusammenbau nach Anspruch 1, **dadurch gekennzeichnet, dass** die Vorrichtung zur Demontage ausgelegt ist, um die Anwendung auf die gezähnten Platten (26) einer Zugkraft F2 der gezähnten Platten in der Beabstandungsrichtung derselben zu ermöglichen.

3. Zusammenbau nach Anspruch 2, **dadurch gekennzeichnet, dass** die Vorrichtung zur Demontage mit den unteren Enden der gezähnten Platten (26) gegenüber den oberen Enden zur Einführung des Gewindeorgans (3) zwischen den gezähnten Platten (26) verbunden wird, und dadurch, dass die Vorrichtung entworfen ist, um die Halterung der gezähnten Platten in parallelen Positionen zu denjenigen ihrer Montage auf dem Gewindeorgan (3) sicherzustellen.

4. Zusammenbau nach Anspruch 3, **dadurch gekennzeichnet, dass** die Vorrichtung zum Abmontieren eine Tafel (35) umfasst, die sich unter den unteren Enden der gezähnten Platten (26) befindet und mit diesen Enden durch Verbindungswände (37) verbunden ist, die in der umgekehrten Richtung mit Bezug auf die Halterungswände (31) geneigt sind.

5. Zusammenbau nach Anspruch 4, **dadurch gekennzeichnet, dass** der Klammerkörper (13) mindestens auf einer freien lateralen Seite (23) offen ist und die Tafel (35) über diese Öffnung zugänglich ist, um die Anwendung der Zugkraft auf die Platte zur Beabstandung derselben zu ermöglichen.

6. Zusammenbau nach einem der Ansprüche 1 bis 5, **dadurch gekennzeichnet, dass** die gezähnten Platten (26) jeweils durch die Halterungswände (31) gehalten werden, und dadurch, dass die Halterungswände durch ein Ende der Platte (26) auf der Ebene des Endes zur Einführung des Gewindeorgans (3) zwischen den zwei Platten (26) verbunden sind, während das andere Ende mit dem Körper (13) verbunden ist, und dadurch, dass die Halterungswände (31) im Körper geneigt sind, so dass sich die Platten bei der Einführung des Gewindeorgans (3) zwischen sie voneinander entfernen.

7. Zusammenbau nach einem der Ansprüche 1 bis 5, **dadurch gekennzeichnet, dass** jede gezähnte Platte (26) im Körper (13) durch zwei geneigte parallele Verbindungswände (31) gehalten wird, die mit den Tafeln (26) und dem Körper ein verformbares Parallelogramm bilden.

8. Zusammenbau nach einem der Ansprüche 1 bis 7, **dadurch gekennzeichnet, dass** er auf dem Gewindeorgan (3) mit Hilfe eines Montagwerkzeugs (40) montiert werden kann, das bei der Montage abnehmbar mit der Klammer assoziiert werden kann.

9. Zusammenbau nach Anspruch 8, **dadurch gekennzeichnet, dass** das Werkzeug (40) entworfen ist, um zum mechanischen Widerstand des Körpers (13) der Klammer bei der Montage derselben auf dem Gewindeorgan (3) beizutragen.

## Claims

1. An assembly comprising a staple, in particular for holding objects such as pipes or cables on a support structure, and a threaded member (3) such as a threaded dowel or a screw, of the type comprising a staple body (13) allowing the latter to be mounted on the threaded member, which comprises two parallel rigid walls (26) which are separated from one another by a distance corresponding to the diameter of the threaded object (3) and which are provided on their opposite face with teeth (29) gripping onto the threads of said member (3) when the latter is engaged between the two walls (26) and which are connected to the body (13) by holding walls (31) which are suitable for allowing the toothed walls (26) to move resiliently away from one another during the engagement of the threaded member (3) between these walls (26), the staple also including a device for disassembling the staple from the threaded member (3) by separating the toothed plates (26) from their gripping position, **characterized in that** the staple body (13) is made in the form of a cage supporting said objects and **in that** the toothed plates (26) are mounted in the inner space of the cage and held by holding walls (31) so as to be resiliently movable between their gripping position on the threads of the threaded member (3) and their separated position for disassembling the staple from the threaded member (3), while remaining in their position parallel to one another, under the effect of a disassembly force applied to the disassembly device and acting in the engagement direction of the threaded member (3) between the toothed plates (26).

2. The assembly according to claim 1, **characterized in that** the disassembly device is suitable for allowing the application, to the toothed plates (26), of a tractive force F2 of the toothed plates in the direction separating the latter.

3. The assembly according to claim 2, **characterized in that** the disassembly device is connected to the lower ends of the toothed plates (26), opposite the upper ends for insertion of the threaded member (3) between the toothed plates, and **in that** the device is designed to ensure that the toothed plates are held in positions parallel to those of their assembly on the threaded member (3).

4. The assembly according to claim 3, **characterized in that** the disassembly device comprises a plate (35) located below the lower ends of the toothed plates (26) and connected to these ends by connecting walls (37) which are inclined in the opposite direction relative to the holding walls (31).

5. The assembly according to claim 4, **characterized in that** the staple body (13) is open on at least one free lateral side (23) and the plate (35) is accessible through this opening to allow the application to the plate of the tractive separating force of the latter.

6. The assembly according to one of claims 1 to 5, **characterized in that** the toothed plates (26) are each held by the holding walls (31) and **in that** the holding walls are connected by one end to the plate (26) at the end for insertion of the threaded member (3) between the two plates (26), while the other end is connected to the body (13) and **in that** the holding walls (31) are inclined in the body such that the plates separate during the insertion of the threaded member (3) between them.

7. The assembly according to one of claims 1 to 5, **characterized in that** each toothed plate (26) is held in the body (13) by two inclined parallel connecting walls (31), which forms a deformable parallelogram with the plates (26) and the body.

8. The assembly according to one of claims 1 to 7, **characterized in that** it can be mounted on the threaded member (3) using a mounting tool (40) which can be removably associated with the staple during mounting.

9. The assembly according to claim 8, **characterized in that** the tool (40) is designed to contribute to the mechanical strength of the body (13) of the staple during the mounting of the latter on the threaded member (3).
